# EUROPÄISCHE PATENTSCHRIFT

(11) **EP 4 546 553 B1**
(45) Veröffentlichungstag und Bekanntmachung des Hinweises auf die Patenterteilung: **16.09.2026**
(21) Anmeldenummer: 23205649.9
(22) Anmeldetag: 24.10.2023
(51) Int. Cl.: H01M 50/588, H01M 50/597, H01R 11/28

(54) **ENERGIESPEICHER UND VERPOLUNGSSCHUTZ FÜR DIESEN ENERGIESPEICHER**
ENERGY STORE AND PROTECTION AGAINST INVERTED POLARITY FOR SAID ENERGY STORE
ACCUMULATEUR D'ÉNERGIE ET PROTECTION CONTRE L'INVERSION DE POLARITÉ POUR LEDIT ACCUMULATEUR D'ÉNERGIE

(43) Veröffentlichungstag der Anmeldung: 30.04.2025
(73) Patentinhaber: din - Dietmar Nocker Facilitymanagement GmbH & Co KG, 4030 Linz (AT)
(72) Erfinder:
(74) Vertreter: Jell, Friedrich

(56) Entgegenhaltungen:
- WO-A1-2017/201033
- DE-A1- 102016 109 882

## Beschreibung

Die Erfindung betrifft einen Verpolungsschutz für einen Energiespeicher, insbesondere Batterie, die einen negativen und positiven Endpol aufweist, mit zwei, insbesondere gleich langen, Poladaptern zur Montage, insbesondere über ein Gewinde, an je einem Endpol des Energiespeichers, wobei jeder Poladapter ein an den betreffenden Endpol aufbringbares Adapterende, ein diesem gegenüberliegendes und freies Adapterende und eine elektrische Kontaktfläche aufweist, und mit zwei, insbesondere gleich langen, Polklemmen zum Anschließen zumindest eines elektrischen Verbrauchers an den Energiespeicher, wobei jede Polklemme eine Aufnahme aufweist, über die Polklemme über das freie Adapterende des betreffenden Poladapters auf diesen aufsteckbar ist, und zumindest eine elektrische Gegenkontaktfläche in der Aufnahme für die Kontaktfläche des betreffenden Poladapters aufweist.

Ein als Batterie ausgebildeter Energiespeicher mit Gewinden an beiden (positive und negativ) Endpolen wird üblicherweise mit Poladaptern versehen, um daran Polklemmen anschließen können. Hierfür weist jeder Poladapter eine elektrische Kontaktfläche auf, an die eine Gegenkontaktfläche der Polklemme anliegt. Dies, wenn eine Aufnahme der Polklemme über das freie Adapterende des Poladapters auf diesen aufgesteckt ist.

Bekannte Poladapter verhindern hierbei keine Verpolung zwischen Batterie und Polklemme, was zu Beschädigungen an elektrischen Verbrauchern führt. Dahin gehend stellt auch der Ersatz von Energiespeichern ein hohes Risiko für einen verpolten Anschluss dar, was die Montage, aber auch die Wartung eines Energiespeichers schwierig und arbeitsintensiv macht.

Die Erfindung hat sich ausgehend vom eingangs geschilderten Stand der Technik die Aufgabe gestellt, einen Verpolungsschutz für einen Energiespeicher zu schaffen, der einfach zu handhaben und sicher ist.

Die Erfindung löst die gestellte Aufgabe durch die Merkmale des Anspruchs 1.

Indem jeder Poladapter in Längsrichtung zumindest zwei Längsabschnitte aufweist, von denen ein erster Längsabschnitt eine elektrische Isolation und ein zweiter Längsabschnitt die Kontaktfläche aufweisen, wobei an den Poladaptern die ersten und zweiten Längsabschnitte vom freien Adapterende der Poladapter ausgesehen zueinander gegengleich angeordnet sind, kann sichergestellt werden, dass die Polklemmen stets richtig angeschlossen werden. Die so auf unterschiedlichen Höhen vorgesehenen Kontaktflächen der beiden Poladapter stellen nämlich sicher, dass eine auf einem falschen Poladapter vorgesehene Polklemmen keinen elektrischen Kontakt mit der Kontaktfläche des Poladapters herstellen kann. Eine Verpolung kann daher nicht eintreten. Der Kontakt zwischen Kontaktfläche und Gegenkontaktfläche kann daher nur dann erfolgen, wenn die Polklemme auf den dafür vorgesehenen Poladapter aufgesteckt wird. Ein standfester, einfach handhabbarer und sicherer Verpolungsschutz ist damit geschaffen.

Konstruktiv vereinfacht kann vorgesehen sein, dass jeder Poladapter einen elektrisch leitenden Grundkörper aufweist, dessen Außenradius im ersten Längsabschnitt kleiner ist als dessen Außenradius im zweiten Längsabschnitt ist. Zudem kann durch diesen Grundkörper für beide Poladapter eine Grundform geschaffen werden, die die Handhabung noch weiter erleichtern kann.

Vorzugsweise weisen die Längsabschnitte je eine zylindrische Außenfläche auf, um das Aufsteckten einer Polklemme zu erleichtern. Auch kann das die Handhabung des Verpolungsschutz weiter vereinfachen.

Beispielsweise kann der Grundkörper auch im zweiten Längsabschnitt die Kontaktfläche ausbilden, um so die Konstruktion des Verpolungsschutzes weiter zu vereinfachen. Zudem kann dies auch zu einem widerstandsarmen Poladapter führen.

Indem die elektrische Isolation als Hülse ausgebildet ist, kann dies den Zusammenbau des Poladapters erleichtern und damit dessen Kosten senken. Zudem ist damit auch eine Wartung des Poladapters erleichtert. Dies beispielsweise, wenn die Hülse einen durchgehenden Längsschlitz aufweist.

Dies umso mehr, wenn die elektrische Isolation am ersten Längsabschnitt befestigt ist, insbesondere dort verschnappt, ist.

Vorzugsweise kann sich der Verpolungsschutz dadurch verbessern, wenn an den Polklemmen die Gegenkontaktflächen in Längsrichtung der Aufnahmen gesehen zueinander überlappungsfrei angeordnet sind.

Ein standfester elektrischer Kontakt zwischen Poladapter und Polklemme kann beispielsweise ermöglicht werden, wenn jede Polklemme einen Kabelschuh mit einer gebogen verlaufenden Kontaktzunge aufweist, die sich entlang des Innenumfangs der betreffenden Aufnahme zumindest abschnittsweise erstreckt und die Gegenkontaktfläche ausbildet.

Vorzugsweise weist zumindest eine Polklemme der Polklemmen einen Temperatursensor auf, der mit der Gegenkontaktfläche thermisch verbunden ist, um damit den Energiespeicher auf dessen Funktionstüchtigkeit sicher überwachen zu können. Vorstellbar ist auch, dass der Temperatursensor an einer Innen- oder Außenseite der Kontaktzunge anliegt.

Die Handhabung der Polklemme kann weiter vereinfacht werden, wenn jede Polklemme einen die Aufnahme im Durchmesser verringerbaren Schnellverschluss aufweist. Zudem kann damit ein standfester elektrischer Kontakt zwischen Poladapter und Polklemme sichergestellt werden.

Die Konstruktion des Verpolungsschutzes kann weiter vereinfacht werden, wenn jede Polklemme ein elektrisch isolierendes Gehäuse, insbesondere aus Kunststoff, mit der Aufnahme für den betreffenden Poladapter aufweist. Zudem ist dadurch die Handhabung der Polklemme deutlich einfacher.

Vorstehendes kann weiter verbessert werden, wenn die Gehäuse der Polklemmen gleich ausgebildet sind.

Die Handhabung bei der Montage der Polklemmen an elektrische Leiter eines Verbrauchers kann weiter erleichtert werden, wenn jede Polklemme zwei voneinander beabstandete Kabelführungen aufweist, die entsprechend des zu kontaktierenden Längsabschnitts des Poladapters ausgerichtet in der Polklemme verlaufen.

Weist das Gehäuse auf einer der Öffnung der Aufnahme gegenüberliegenden Gehäuseseite einen Zugang für eine Messspitze eines Messinstruments auf, kann selbst bei auf dem Poladapter vorgesehener Polklemme des Energiespeichers elektrische Parameter abgenommen werden. Dies auch besonders handhabungsfreundlich.

Insbesondere dann, wenn der Zugang einen der Aufnahme in der Tiefe zulaufenden Abschnitt aufweist, der sich zur Aufnahme hin öffnet.

Insbesondere eignet sich der erfindungsgemäße Verpolungsschutz für einen Energiespeicher, insbesondere Batterie, mit einem negativen Endpol und positiven Endpol, wobei der erste Poladapter am negativen Endpol und der zweite Poladapter am positiven Endpol befestigt sind und wobei an diesen Poladaptern je eine Polklemme der Polklemmen vorgesehen ist

Beispielsweise kann dieser Energiespeicher bei einer Notbeleuchtungs- und/oder Sicherheitsbeleuchtungsanlage verwendet werden.

In den Figuren ist beispielsweise der Erfindungsgegenstand anhand eines Ausführungsbeispiels näher dargestellt. Es zeigen
- Fig. 1: eine Schnittansicht auf einen als Batterie ausgeführten Energiespeicher mit einem Verpolungsschutz bei einer Notbeleuchtungs- und/oder Sicherheitsbeleuchtungsanlage,
- Fig. 2: eine Schnittansicht in Längsrichtung durch einen Poladapter des nach Fig. 1 dargestellten Verpolungsschutzes,
- Fig. 3: eine Schnittansicht in Längsrichtung durch eine Polklemme des nach Fig. 1 dargestellten Verpolungsschutzes und
- Fig. 4: eine Schnittansicht in Querrichtung durch den Poladapter nach Fig. 2.

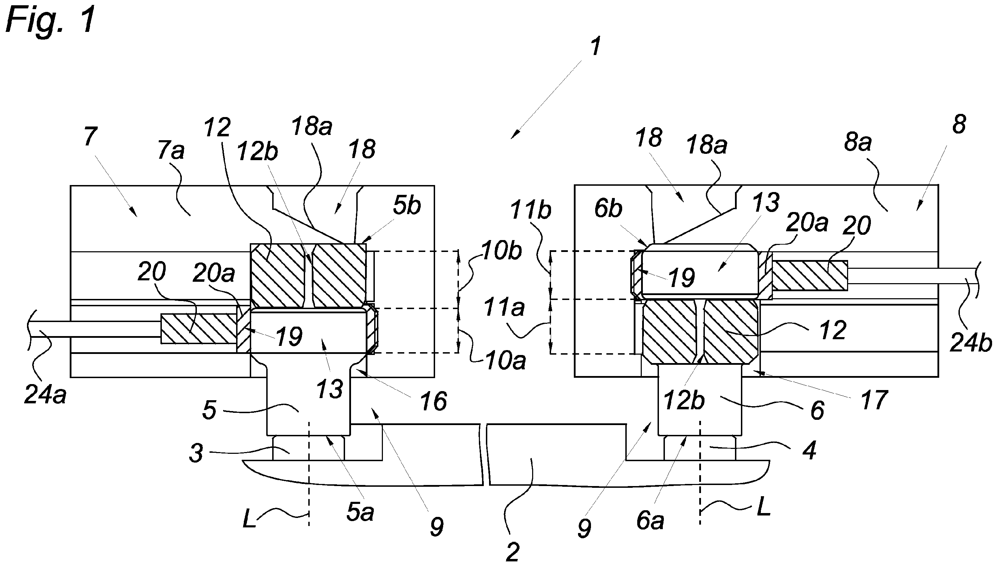

Nach Fig. 1 ist von einer Notbeleuchtungs- und/oder Sicherheitsbeleuchtungsanlage 1 ein Energiespeicher 2 dargestellt, der als Batterie ausgebildet ist und als Notstrombatterie verwendet wird.

Der Energiespeicher 2 weist einen negativen Endpol 3 (Minuspol) und positiven Endpol 4 (Pluspol) auf. Beide Endpole 3 und 4 sind mit einem Innengewinde 3a, 4a versehen. Mit diesem Innengewinde 3a, 4a sind Poladapter 5, 6 über eine Polschraube 3b, 3c an je einem Endpol 3 oder 4 der Endpole 3, 4 lösbar befestigt. Damit ist ein erster Poladapter 5 am negativen Endpol 3 und ein zweiter Poladapter 6 am positiven Endpol 4 befestigt. Auch sind die Poladapter 5, 6 -wie in Fig. 1 dargestellt- jeweils mit einem Adapterende 5a, 6a auf dem betreffenden Endpol 3, 4 direkt aufgebracht, was einen elektrischen Kontakt zwischen Poladapter 5, 6 und Endpol 3, 4 herstellt. Jeder Poladapter 5, 6 weist an seiner Außenseite eine elektrische Kontaktfläche 13 auf.

An diesen Poladaptern 5, 6 wird je eine Polklemme 7, 8 aufgesteckt. Die Polklemmen 7, 8 weisen hierzu je eine Aufnahme 16, 17 auf. Über diese Aufnahme 16, 17 sind die Polklemmen 7, 8 über ein freie Adapterende 5b, 6b des betreffenden Poladapters 5, 6 auf diesen Poladapters 5, 6 aufsteckbar. In der Aufnahme 16, 17 ist eine elektrische Gegenkontaktfläche 19 vorgesehen, um mit der elektrischen Kontaktfläche 13 des betreffenden Poladapters 5, 6 zu verbinden.

Um erfindungsgemäß einen Verpolungsschutz 9 für diesen Energiespeicher 2 zu schaffen, sind die Poladapter 5, 6 besonders ausgestaltet, wie in den Figuren 1, 2 und 3 zu erkennen. So weist jeder Poladapter 5, 6 je zwei Längsabschnitte 10a, 10b oder 11a, 11b auf, die sich voneinander unterscheiden. Der erste Längsabschnitt 10a, 11a weist eine elektrische Isolation 12 und der zweite Längsabschnitt 10b, 11b weist eine elektrische Kontaktfläche 13 für die jeweilige Polklemme 7, 8 auf. Der Verpolungsschutz wird nun dadurch sichergestellt, indem an den Poladaptern 5, 6 die ersten und zweiten Längsabschnitte vom freien Adapterende 5b, 6b der Poladapter 5, 6 ausgesehen zueinander gegengleich angeordnet sind, wie dies in Fig. 1 erkannt werden kann. So befinden sich auf Höhe der elektrischen Kontaktfläche 13 des ersten Poladapters 5 die elektrische Isolierung 12 des zweiten Poladapters 6. Auf Höhe der elektrischen Isolierung 12 des ersten Poladapters 5 findet sich die elektrische Kontaktfläche 13 des zweiten Poladapters 6. Die Polklemmen 7, 8 können dadurch nicht an falsche Endpole 3, 4 des Energiespeicher 2 angeklemmt werden. Dies, weil bei einer Polverwechslung die falsche Polklemme 7, 8 keinen elektrischen Kontakt mit dem Poladapter 5, 6 herstellen kann.

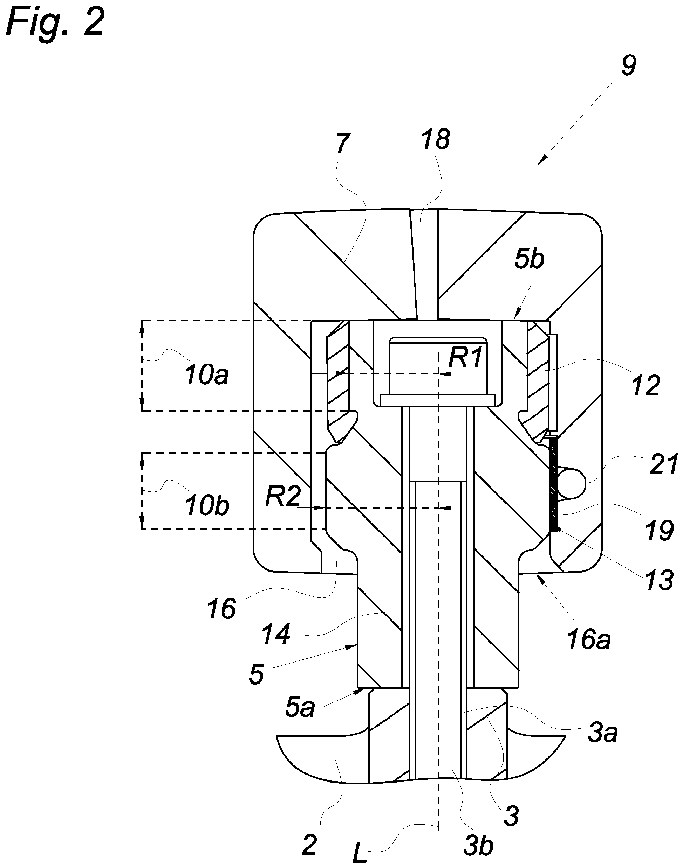

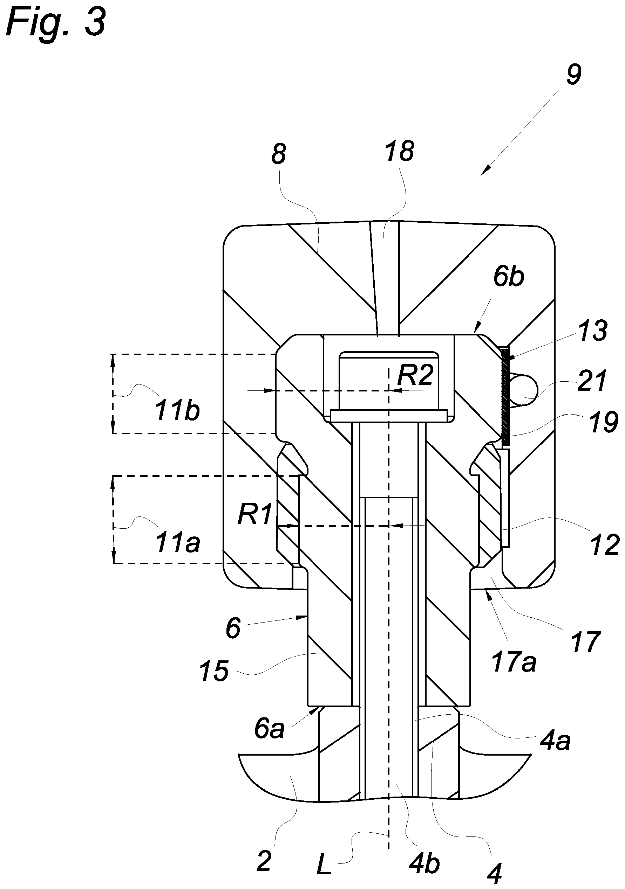

Jeder Poladapter 5, 6 weist einen elektrisch leitenden Grundkörper 14, 15 auf, wie in den Figuren 2 und 3 beispielsweise zu erkennen. Jeden Grundkörper 14, 15 durchdringt eine Polschraube 3b, 3c, die den Poladapter 5, 6 an den betreffenden negativen oder positiven Endpol 3, 4 befestigt.

Die Grundkörper 14, 15 weisen in Längsrichtung L unterschiedlichen Außenradien R1, R2 auf. Im ersten Längsabschnitt 10a, 11a weist der Grundkörper 14, 15 einen Außenradius R1 auf, der zum zweiten Längsabschnitt 10b, 11b mit dem Außenradius R2 kleiner ist. Damit kann am kleineren Außenradius R1 des Grundkörpers 14, 15 eine elektrische Isolation 12 vorgesehen werden, ohne damit die Außenabmessung des Poladapters 5, 6 zu erhöhen. Auch bildet der Grundkörper 14, 15 im zweiten Längsabschnitt 10b, 11b die Kontaktfläche 13 aus und da auch die Längsabschnitte 10a, 10b, 11a, 11b je eine zylindrische Außenfläche aufweisen, sind die Poladapter 5, 6 konstruktiv einfach ausgeführt.

Die elektrische Isolation 12 der Poladapter 5, 6 ist als Hülse ausgebildet. Die Hülse ist mit einem, über die gesamten Hülsenlänge durchgehenden Längsschlitz 12a versehen. Damit ist die elektrische Isolation 12 am Poladapter 5, 6 einfach zu befestigten, und zwar verschnappt diese mit dem betreffenden Poladapter 5, 6.

Jede Polklemme 7, 8 weist ein elektrisch isolierendes Gehäuse 7a, 8a aus Kunststoff auf. Das Gehäuse 7a, 8a bildet die Aufnahme 16, 17 für den betreffenden Poladapter 5, 6 aus, wie in Fig. 1 zu erkennen. Durch den erfindungsgemäßen Verpolungsschutz können die Gehäuse 7a, 8a auch gleich ausgebildet werden, was die Konstruktion und deren Herstellung weiter vereinfacht.

Dies wird auch dadurch begünstigt, dass an den Polklemmen 7, 8 die Gegenkontaktflächen 19 in Längsrichtung L der Aufnahmen 16, 17 gesehen zueinander überlappungsfrei angeordnet sind. So befinden sich diese Gegenkontaktflächen 19 auf unterschiedlichen Höhen, wie in Fig. 1 zu erkennen.

Diese Polklemmen 7, 8 weisen einer der Öffnung 16a, 17a der Aufnahme 16, 17 gegenüberliegenden Gehäuseseite einen Zugang 18 für eine Messspitze eines Messinstruments auf. Der Zugang 18 weist einen, der Aufnahme 16, 17 in der Tiefe zulaufenden Abschnitt 18a auf, der sich zur Aufnahme 16, 17 hin öffnet. Damit ist es handhabungsfreundlich möglich, bei aufgesteckten Polklemmen 7, 8 vom Energiespeicher 2 Messdaten, beispielsweise die Spannung, abzugreifen.

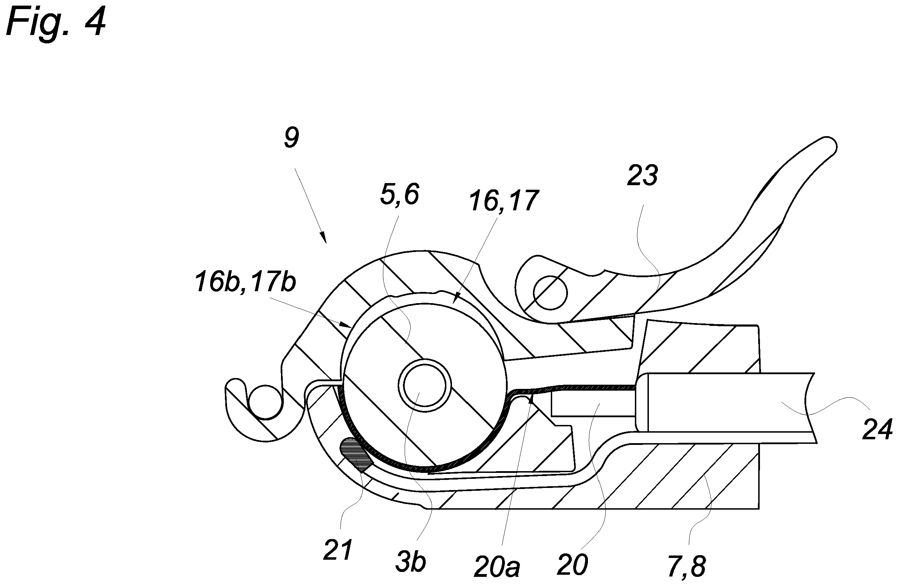

Die Polklemmen 7, 8 weisen zudem je einen Kabelschuh 20 mit einer gebogen verlaufenden Kontaktzunge 20a auf, die sich entlang des Innenumfangs 16b der Aufnahme 16, 17 abschnittsweise erstreckt, und damit die Gegenkontaktfläche 19 ausbildet, wie im Detail in Fig. 4 zu erkennen ist. Der Kabelschuh 20 schießt an ein elektrisches Kabel 24a, 24b entsprechend dem diesbezüglichen Poladapter 5, 6 an.

Zudem weist jede Polklemme 7, 8 einen Temperatursensor 21 auf, der an der Außenseite der Kontaktzunge 20a anliegt, was eine zuverlässige Überwachung des Energiespeichers 2 ermöglicht.

Nach Fig. 2 und 3 weisen die Polklemmen 7, 8 je zwei voneinander beabstandete Kabelführungen 22a, 22b auf, die entsprechend des zu kontaktierenden Längsabschnitts 10a, 10b, 11a, 11b des Poladapters 5, 6 ausgerichtet in der Polklemme 7, 8 verlaufen. Dies erleichtert den elektrischen Anschluss der Polklemmen 7, 8 an elektrische Kabel 24a, 24b erheblich.

Zudem sind die Polklemmen 7, 8 mit je einem die Aufnahme 16, 17 im Durchmesser verringerbaren Schnellverschluss 23 versehen, wie in Fig. 4 zu erkennen, was die Montage der Polklemmen 7, 8 erleichtert.

## Patentansprüche

1. Verpolungsschutz für einen Energiespeicher (2), insbesondere Batterie, die einen negativen und positiven Endpol (3, 4) aufweist,
mit zwei, insbesondere gleich langen, Poladaptern (5, 6) zur Montage, insbesondere über ein Gewinde, an je einem Endpol (3, 4) des Energiespeichers (2), wobei jeder Poladapter (5, 6) ein an den betreffenden Endpol (3, 4) aufbringbares Adapterende (5a, 6a), ein diesem gegenüberliegendes und freies Adapterende (5b, 6b) und eine elektrische Kontaktfläche (13) aufweist,
und mit zwei, insbesondere gleich langen, Polklemmen (7, 8) zum Anschließen zumindest eines elektrischen Verbrauchers an den Energiespeicher (2), wobei jede Polklemme (7, 8) eine Aufnahme (16, 17) aufweist, über die Polklemme (7, 8) über das freie Adapterende (5b, 6b) des betreffenden Poladapters (5, 6) auf diesen aufsteckbar ist, und zumindest eine elektrische Gegenkontaktfläche (19) in der Aufnahme (16, 17) für die Kontaktfläche (13) des betreffenden Poladapters (5, 6) aufweist,
**dadurch gekennzeichnet, dass**
jeder Poladapter (5, 6) in Längsrichtung (L) zumindest zwei Längsabschnitte (10a, 10b, 11a, 11b) aufweist, von denen ein erster Längsabschnitt (10a, 11a) eine elektrische Isolation (12) und ein zweiter Längsabschnitt (10b, 11b) die Kontaktfläche (13) aufweisen, wobei an den Poladaptern (5, 6) die ersten und zweiten Längsabschnitte (10a, 10b, 11a, 11b) vom freien Adapterende (5b, 6b) der Poladapter (5, 6) ausgesehen zueinander gegengleich angeordnet sind.

2. Verpolungsschutz nach Anspruch 1, **dadurch gekennzeichnet, dass** jeder Poladapter (5, 6) einen elektrisch leitenden Grundkörper (14, 15) aufweist, dessen Außenradius (R1) im ersten Längsabschnitt (10a, 11a) kleiner ist als dessen Außenradius (R2) im zweiten Längsabschnitt (10b, 11b) ist.

3. Verpolungsschutz nach Anspruch 1 oder 2, **dadurch gekennzeichnet, dass** die Längsabschnitte (10a, 10b, 11a, 11b) je eine zylindrische Außenfläche aufweisen und/oder dass der Grundkörper (14, 15) im zweiten Längsabschnitt (10b, 11b) die Kontaktfläche (13) ausbildet.

4. Verpolungsschutz nach einem der Ansprüche 1 bis 3, **dadurch gekennzeichnet, dass** die elektrische Isolation (12) als Hülse, insbesondere mit einem durchgehenden Längsschlitz (12a), ausgebildet ist, und/oder dass die elektrische Isolation (12) am ersten Längsabschnitt (10a, 11a) befestigt ist, insbesondere dort verschnappt, ist.

5. Verpolungsschutz nach einem der Ansprüche 1 bis 4, **dadurch gekennzeichnet, dass** an den Polklemmen (7, 8) die Gegenkontaktflächen (19) in Längsrichtung (L) der Aufnahmen (16, 17) gesehen zueinander überlappungsfrei angeordnet sind.

6. Verpolungsschutz nach einem der Ansprüche 1 bis 5, **dadurch gekennzeichnet, dass** jede Polklemme (7, 8) einen Kabelschuh (20) mit einer gebogen verlaufenden Kontaktzunge (20a) aufweist, die sich entlang des Innenumfangs der betreffenden Aufnahme (16, 17) zumindest abschnittsweise erstreckt und die Gegenkontaktfläche (19) ausbildet.

7. Verpolungsschutz nach einem der Ansprüche 1 bis 6, **dadurch gekennzeichnet, dass** zumindest eine Polklemme (7, 8) der Polklemmen (7, 8) einen Temperatursensor (21) aufweist, der mit der Gegenkontaktfläche (19) thermisch verbunden ist, insbesondere an einer Innen- oder Außenseite der Kontaktzunge (20a) anliegt.

8. Verpolungsschutz nach einem der Ansprüche 1 bis 7, **dadurch gekennzeichnet, dass** jede Polklemme (7, 8) einen die Aufnahme (16, 17) im Durchmesser verringerbaren Schnellverschluss (23) aufweist.

9. Verpolungsschutz nach einem der Ansprüche 1 bis 9, **dadurch gekennzeichnet, dass** jede Polklemme (7, 8) ein elektrisch isolierendes Gehäuse (7a, 8a), insbesondere aus Kunststoff, mit der Aufnahme (16, 17) für den betreffenden Poladapter (5, 6) aufweist.

10. Verpolungsschutz nach Anspruch 9, **dadurch gekennzeichnet, dass** die Gehäuse (7a, 8a) der Polklemmen (7, 8) gleich ausgebildet sind.

11. Verpolungsschutz nach Anspruch 9 oder 10, **dadurch gekennzeichnet, dass** jede Polklemme (7, 8) zwei voneinander beabstandete Kabelführungen (22a, 22b) aufweist, die entsprechend des zu kontaktierenden Längsabschnitts (10b, 11b) des Poladapters (5, 6) ausgerichtet in der Polklemme (7, 8) verlaufen.

12. Verpolungsschutz nach Anspruch 9, 10 oder 11, **dadurch gekennzeichnet, dass** das Gehäuse (7a, 8a) auf einer der Öffnung (16a) der Aufnahme (16, 17) gegenüberliegenden Gehäuseseite einen Zugang (18) für eine Messspitze eines Messinstruments aufweist.

13. Verpolungsschutz nach Anspruch 12, **dadurch gekennzeichnet, dass** der Zugang (18) einen der Aufnahme (16, 17) in der Tiefe zulaufenden Abschnitt (18a) aufweist, der sich zur Aufnahme (16, 17) hin öffnet.

14. Energiespeicher, insbesondere Batterie, mit einem negativen Endpol (3) und positiven Endpol (4) und mit einem Verpolungsschutz (9) nach einem der Ansprüche 1 bis 13, wobei der erste Poladapter (5) am negativen Endpol (3) und der zweite Poladapter (6) am positiven Endpol (4) befestigt sind und wobei an diesen Poladaptern (5, 6) je eine Polklemme (7, 8) der Polklemmen (7, 8) vorgesehen ist.

15. Notbeleuchtungs- und/oder Sicherheitsbeleuchtungsanlage (1) mit einem Energiespeicher (2) nach Anspruch 14.

## Claims

1. Reverse polarity protection for an energy storage device (2), more particularly a battery, which has a negative and a positive terminal (3, 4),
having two terminal adapters (5, 6), more particularly of equal length, for mounting, more particularly via a thread, to one respective terminal (3, 4) of the energy storage device (2), wherein each terminal adapter (5, 6) has an adapter end (5a, 6a) applicable to the relevant terminal (3, 4), a free adapter end (5b, 6b) opposite thereto, and an electrical contact surface (13),
and having two terminal clamps (7, 8), more particularly of equal length, for connecting at least one electrical load to the energy storage device (2), wherein each terminal clamp (7, 8) has a receptacle (16, 17), via which the terminal clamp (7, 8) can be plugged onto the relevant terminal adapter (5, 6) over its free adapter end (5b, 6b), and has at least one electrical mating contact surface (19) in the receptacle (16, 17) for the contact surface (13) of the relevant terminal adapter (5, 6),
**characterized in that**
each terminal adapter (5, 6) has at least two longitudinal sections (10a, 10b, 11a, 11b) in the longitudinal direction (L), of which a first longitudinal section (10a, 11a) has an electrical insulation (12) and a second longitudinal section (10b, 11b) has the contact surface (13), wherein the first and second longitudinal sections (10a, 10b, 11a, 11b) on the terminal adapters (5, 6) are arranged inversely opposite to one another as viewed from the free adapter end (5b, 6b) of the terminal adapters (5, 6).

2. Reverse polarity protection according to claim 1, **characterized in that** each terminal adapter (5, 6) has an electrically conductive base body (14, 15) whose outer radius (R1) in the first longitudinal section (10a, 11a) is smaller than its outer radius (R2) in the second longitudinal section (10b, 11b).

3. Reverse polarity protection according to claim 1 or 2, **characterized in that** the longitudinal sections (10a, 10b, 11a, 11b) each have a cylindrical outer surface and/or **in that** the base body (14, 15) forms the contact surface (13) in the second longitudinal section (10b, 11b).

4. Reverse polarity protection according to one of claims 1 to 3, **characterized in that** the electrical insulation (12) is configured as a sleeve, more particularly with a continuous longitudinal slot (12a), and/or **in that** the electrical insulation (12) is fastened to the first longitudinal section (10a, 11a), more particularly snapped into place there.

5. Reverse polarity protection according to one of claims 1 to 4, **characterized in that** on the terminal clamps (7, 8), the mating contact surfaces (19) are arranged without overlapping with one another as viewed in the longitudinal direction (L) of the receptacles (16, 17).

6. Reverse polarity protection according to one of claims 1 to 5, **characterized in that** each terminal clamp (7, 8) has a cable lug (20) with a contact tongue (20a) which extends in a curved manner and at least in sections along the inner circumference of the relevant receptacle (16, 17) and which forms the mating contact surface (19).

7. Reverse polarity protection according to one of claims 1 to 6, **characterized in that** at least one terminal clamp (7, 8) of the terminal clamps (7, 8) has a temperature sensor (21) which is thermally connected to the mating contact surface (19), more particularly abutting an inner or outer side of the contact tongue (20a).

8. Reverse polarity protection according to one of claims 1 to 7, **characterized in that** each terminal clamp (7, 8) has a quick-release fastener (23) capable of reducing the diameter of the receptacle (16, 17).

9. Reverse polarity protection according to one of claims 1 to 9, **characterized in that** each terminal clamp (7, 8) has an electrically insulating housing (7a, 8a), more particularly made of plastic, with the receptacle (16, 17) for the relevant terminal adapter (5, 6).

10. Reverse polarity protection according to claim 9, **characterized in that** the housings (7a, 8a) of the terminal clamps (7, 8) are configured identically.

11. Reverse polarity protection according to claim 9 or 10, **characterized in that** each terminal clamp (7, 8) has two cable guides (22a, 22b) which are spaced apart from one another and extend in the terminal clamp (7, 8) aligned in accordance with the longitudinal section (10b, 11b) of the terminal adapter (5, 6) to be contacted.

12. Reverse polarity protection according to claim 9, 10 or 11, **characterized in that** the housing (7a, 8a) has an access (18) for a measuring tip of a measuring instrument on a housing side opposite the opening (16a) of the receptacle (16, 17).

13. Reverse polarity protection according to claim 12, **characterized in that** the access (18) has a section (18a) which tapers in depth towards the receptacle (16, 17) and opens towards the receptacle (16, 17).

14. Energy storage device, more particularly a battery, having a negative terminal (3) and a positive terminal (4) and having a reverse polarity protection (9) according to one of claims 1 to 13, wherein the first terminal adapter (5) is attached to the negative terminal (3) and the second terminal adapter (6) is attached to the positive terminal (4), and wherein one terminal clamp (7, 8) of the terminal clamps (7, 8) is provided on each of these terminal adapters (5, 6).

15. Emergency lighting and/or safety lighting system (1) having an energy storage device (2) according to claim 14.

## Revendications

1. Protection contre les inversions de polarité pour un accumulateur d'énergie (2), en particulier une batterie, présentant un pôle terminal négatif et un autre positif (3, 4),
avec deux adaptateurs polaires (5, 6), en particulier de même longueur, destinés à se monter chacun, en particulier à l'aide d'un filetage, sur un pôle terminal (3, 4) de l'accumulateur d'énergie (2), chaque adaptateur polaire (5, 6) présentant une extrémité d'adaptateur (5a, 6a) qui peut être placée sur le pôle terminal (3, 4) correspondant, une extrémité d'adaptateur (5b, 6b) libre opposée à celle-ci et une surface de contact électrique (13),
et avec deux bornes polaires (7, 8), en particulier de même longueur, destinées à connecter au moins un consommateur électrique à l'accumulateur d'énergie (2), chaque borne polaire (7, 8) comportant un réceptacle (16, 17) à l'aide duquel la borne polaire (7, 8) peut être emboîtée par-dessus l'extrémité d'adaptateur libre (5b, 6b) de l'adaptateur polaire (5, 6) correspondant sur celui-ci, et au moins une surface de contact électrique opposée (19) dans le réceptacle (16, 17) pour la surface de contact (13) de l'adaptateur polaire (5, 6) correspondant,
**caractérisée en ce que**
chaque adaptateur polaire (5, 6) présente dans le sens de la longueur (L) au moins deux segments longitudinaux (10a, 10b, 11a, 11b), dont un premier segment longitudinal (10a, 11a) présente une isolation électrique (12) et un deuxième segment longitudinal (10b, 11b) présente la surface de contact (13), les premier et deuxième segments longitudinaux (10a, 10b, 11a, 11b) étant disposés sur les adaptateurs polaires (5, 6) de façon symétrique, vus l'un vers l'autre depuis l'extrémité d'adaptateur libre (5b, 6b) des adaptateurs polaires (5, 6).

2. Protection contre les inversions de polarité selon la revendication 1, **caractérisée en ce que** chaque adaptateur polaire (5, 6) comporte un corps de base conducteur électrique (14, 15) dont le rayon extérieur (R1) dans le premier segment longitudinal (10a, 11a) est plus petit que son rayon extérieur (R2) dans le deuxième segment longitudinal (10b, 11b).

3. Protection contre les inversions de polarité selon la revendication 1 ou 2, **caractérisée en ce que** les segments longitudinaux (10a, 10b, 11a, 11b) présentent chacun une surface extérieure cylindrique et/ou **en ce que** le corps de base (14, 15) forme la surface de contact (13) dans le deuxième segment longitudinal (10b, 11b).

4. Protection contre les inversions de polarité selon l'une des revendications 1 à 3, **caractérisée en ce que** l'isolation électrique (12) est conçue comme une douille, en particulier avec une fente longitudinale traversante (12a), et/ou **en ce que** l'isolation électrique (12) est fixée sur le premier segment longitudinal (10a, 11a), en particulier clipsée sur celui-ci.

5. Protection contre les inversions de polarité selon l'une des revendications 1 à 4, **caractérisée en ce que** les surfaces de contact opposées (19) sont disposées sur les bornes polaires (7, 8), vues dans le sens longitudinal (L) des réceptacles (16, 17), sans se chevaucher les unes les autres.

6. Protection contre les inversions de polarité selon l'une des revendications 1 à 5, **caractérisée en ce que** chaque borne polaire (7, 8) comporte une cosse de câble (20) avec une languette de contact incurvée (20a), qui s'étend au moins en partie le long de la circonférence intérieure du réceptacle (16, 17) correspondant et forme la surface de contact opposée (19).

7. Protection contre les inversions de polarité selon l'une des revendications 1 à 6, **caractérisée en ce qu'**au moins une borne polaire (7, 8) parmi les bornes polaires (7, 8) comporte un capteur de température (21) qui est en liaison thermique avec la surface de contact opposée (19), en particulier repose sur une face intérieure ou extérieure de la languette de contact (20a).

8. Protection contre les inversions de polarité selon l'une des revendications 1 à 7, **caractérisée en ce que** chaque borne polaire (7, 8) comporte une fermeture rapide (23) qui peut réduire le diamètre du réceptacle (16, 17).

9. Protection contre les inversions de polarité selon l'une des revendications 1 à 9, **caractérisée en ce que** chaque borne polaire (7, 8) comporte un boîtier isolant électrique (7a, 8a), en particulier en matière plastique, avec le réceptacle (16, 17) destiné à l'adaptateur polaire (5, 6) correspondant.

10. Protection contre les inversions de polarité selon la revendication 9, **caractérisée en ce que** les boîtiers (7a, 8a) des bornes polaires (7, 8) sont de conception identique.

11. Protection contre les inversions de polarité selon la revendication 9 ou 10, **caractérisée en ce que** chaque borne polaire (7, 8) comporte deux guide-câbles (22a, 22b) écartés l'un de l'autre, qui passent dans la borne polaire (7, 8) suivant une orientation qui correspond à celle du segment longitudinal (10b, 11b) de l'adaptateur polaire (5, 6) à mettre en contact.

12. Protection contre les inversions de polarité selon la revendication 9, 10 ou 11, **caractérisée en ce que** le boîtier (7a, 8a) comporte, sur un côté faisant face à l'ouverture (16a) du réceptacle (16, 17), un accès (18) pour une pointe de mesure d'un instrument de mesure.

13. Protection contre les inversions de polarité selon la revendication 12, **caractérisée en ce que** l'accès (18) présente un segment (18a) qui s'étend en profondeur vers le réceptacle (16, 17) et s'ouvre vers le réceptacle (16, 17).

14. Accumulateur d'énergie, en particulier batterie, avec un pôle terminal négatif (3) et un pôle terminal positif (4) et avec une protection contre les inversions de polarité (9) selon l'une des revendications 1 à 13, dans lequel le premier adaptateur polaire (5) est fixé sur le pôle terminal négatif (3) et le deuxième adaptateur polaire (6) sur le pôle terminal positif (4) et dans lequel une borne polaire (7, 8) parmi les bornes polaires (7, 8) est prévue sur chacun de ces adaptateurs polaires (5, 6).

15. Installation d'éclairage de secours et/ou d'éclairage de sécurité (1) équipée d'un accumulateur d'énergie (2) selon la revendication 14.
